Europäisches Patentamt

European Patent Office

Office européen des brevets

(11) Veröffentlichungsnummer: **0 337 098**
**A2**

## (12) EUROPÄISCHE PATENTANMELDUNG

(21) Anmeldenummer: 89103708.7

(22) Anmeldetag: 03.03.89

(51) Int. Cl.⁴: **B64D 11/06**

(30) Priorität: 11.04.88 DE 3811939

(43) Veröffentlichungstag der Anmeldung:
18.10.89 Patentblatt 89/42

(34) Benannte Vertragsstaaten:
AT BE CH DE ES FR GB GR IT LI LU NL SE

(71) Anmelder: Buderus Sell GmbH
Hüttenweg
D-6348 Herborn Hess. 1(DE)

(72) Erfinder: Schulz, Thilo
Bergwiese 5
D-6348 Herborn(DE)
Erfinder: Schneider, Thomas
Zum roten Stein 6
D-6348 Herborn(DE)
Erfinder: Schmitz, Karl-Heinz
Drosselweg 3
D-6348 Herborn(DE)

(54) Fluggastsitz und Verfahren zu seiner Herstellung.

(57) Um einen Fluggastsitz einerseits möglichst leicht zu gestalten, aber andererseits den Sicherheitsforderungen zu genügen, wird vorgeschlagen, die wesentlichen Bauteile in Sandwichbauweise herzustellen.

Fig. 1

EP 0 337 098 A2

## Fluggastsitz und Verfahren zu seiner Herstellung

Die Erfindung betrifft einen Fluggastsitz, welcher aus einer auf Sitzfüßen montierten Sitzschale mit seitlichen Holmen und Armlehnen besteht und eine verstellbare Rückenlehne mit Klapptisch aufweist.

Bei der Gestaltung eines Fluggastsitzes kommt es neben allgemein gültigen Gesichtspunkten - wie anatomisch gute Sitzhaltung und Ästetik - insbesondere auf die Einhaltung von speziellen Sicherheitsanforderungen sowie eine gewichtssparende Bauweise an, weil jede Gewichtseinsparung mit einer Einsparung der Betriebskosten eines Flugzeuges verbunden ist.

Wegen der hohen Sicherheitsanforderungen ist es bekannt, die tragenden Teile eines Fluggastsitzes aus tiefgezogenen und mit Sicken versehenen Metallteilen herzustellen (DE-OS 1 900 070) oder gefräßte bzw. gegossene Aluminiumteile zu verwenden (FR-OS 75 35 215). Traggestelle aus rohrförmigen Elementen für Fluggastsitze werden in der GB-PS 2 022 403 beschrieben.

Der Erfindung liegt die Aufgabe zugrunde, einen Fluggastsitz so zu gestalten, daß er sich wirtschaftlich herstellen läßt und bei ausreichender Sicherheit ein möglichst geringes Gewicht aufweist.

Diese Aufgabe wird mit den im kennzeichnenden Teil des Patentanspruches angegebenen Merkmalen gelöst.

Die aus Sandwichplatten als Ausgangsmaterial bestehenden Strukturbauteile lassen sich im Gegensatz zu sphärisch verformten Teilen auch in der Serienfertigung wirtschaftlich herstellen. Durch Optimierung der Deckschichtenstärke der Sandwichplatten kann das Gewicht der Sitze merklich gesenkt werden. Dies geht nicht zu Lasten des Sitzkomforts.

Weitere wesentliche Merkmale und das Herstellungsverfahren sind Gegenstand der Unteransprüche.

Anhand von Ausführungsbeispielen, welche in der Zeichnung dargestellt sind, wird die Erfindung näher erläutert.

Es zeigen:

Fig. 1 die Gesamtansicht eines Fluggastsitzes im Schnitt

Fig. 2 den Grundkörper der Sitzschale

Fig. 3 eine aus Sandwichplatten und Formteil zusammensetzbare Sitzschale

Fig. 4,5 und 6 den Aufbau der Holme und Armlehnen

Fig. 7a und 7b den Aufbau der Sitzfüße

Fig. 8a, 8b und 8c den Aufbau der Rückenlehne.

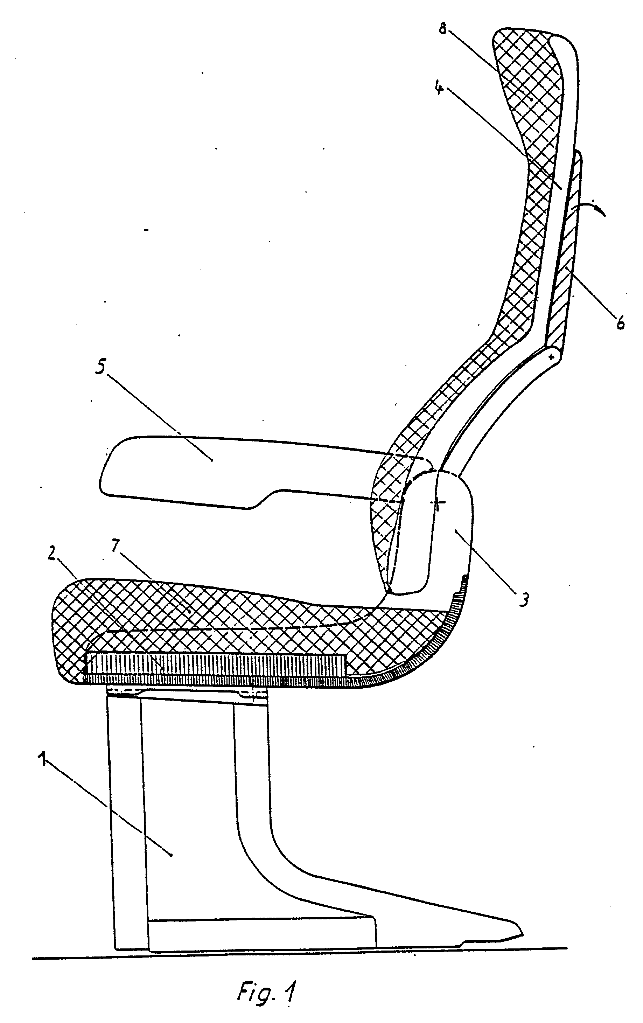

Der Fluggastsitz besteht im wesentlichen aus den im Boden verankerten Sitzfüßen 1, den auf den Sitzfüßen montierten Sitzschalen 2 mit den seitlichen Holmen 3 und der Rückenlehne 4. Außerdem sind noch die Armlehnen 5 und der hinter der Rückenlehne 4 angebrachte Klapptisch 6 wichtige Teile für die Funktion eines Fluggastsitzes. Die den Sitz bestimmenden Strukturbauteile Sitzfuß, Sitzschale, Holm, Rückenlehne und auch Klapptisch sind wegen ihres räumlichen Ausmaßes für das Gewicht eines Sitzes ausschlaggebend. Sitzschale und Rückenlehne bestimmen im wesentlichen den Sitzkomfort, auch was den Wechsel zwischen unterschiedlichen Sitzpositionen betrifft. In Fig. 1 sind neben den aus Sandwichplatten aufgebauten Bauteilen noch das Sitzpolster 7 und das Rückenpolster 8 angedeutet, welche leicht ausgewechselt werden können.

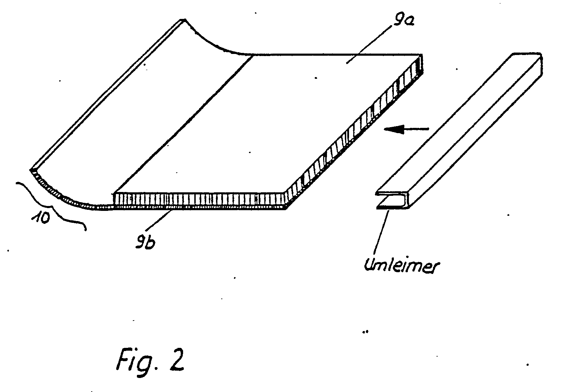

In Fig. 2 ist der Grundaufbau der Sitzschale 2 dargestellt.

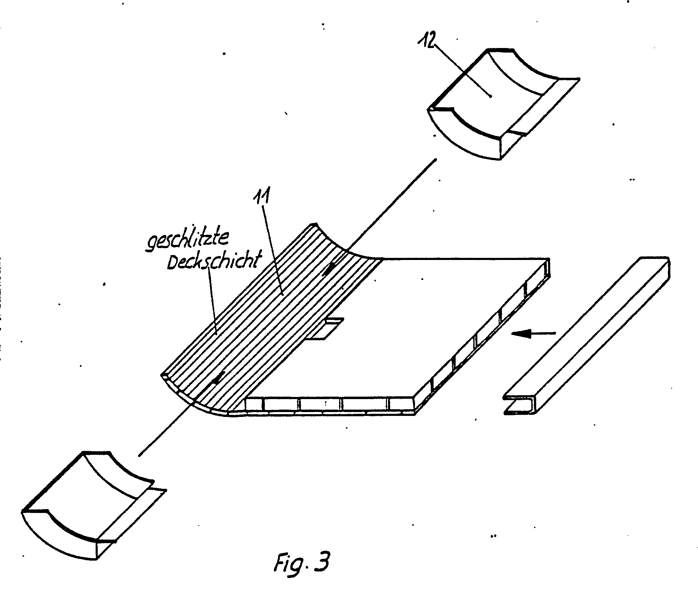

Eine obere dickere Sandwichplatte 9a ist mit einer unteren dünneren Sandwichplatte 9b verbunden. Die über die Sandwichplatte 9a nach hinten verlängerte Sandwichplatte 9b ist im verlängerten Teil 10 gekrümmt. Die Krümmung kann dadurch erzielt werden, daß die noch nicht ausgehärtete Sandwichplatte 9b, zumindest eine ihrer mit Harz getränkten Deckschichten in einer der gewünschten Krümmung entsprechenden Form ausgehärtet wird. Es ist auch möglich, die an der konkaven Seite liegende ausgehärtete Deckschicht der dünneren Sandwichplatte zu schlitzen, so daß die Vielzahl der parallelen Längsschlitze 11 es ermöglichen die Sandwichplatte 9b in der gewünschten Weise zu krümmen. In den gekrümmten Bogen werden anschließend Formteile 12 eingeklebt, so daß die beabsichtigte stabile Form erreicht wird. Fig. 3 deutet den Aufbau mit einer geschlitzten Deckschicht und den einzuklebenden Formteilen 12 an.

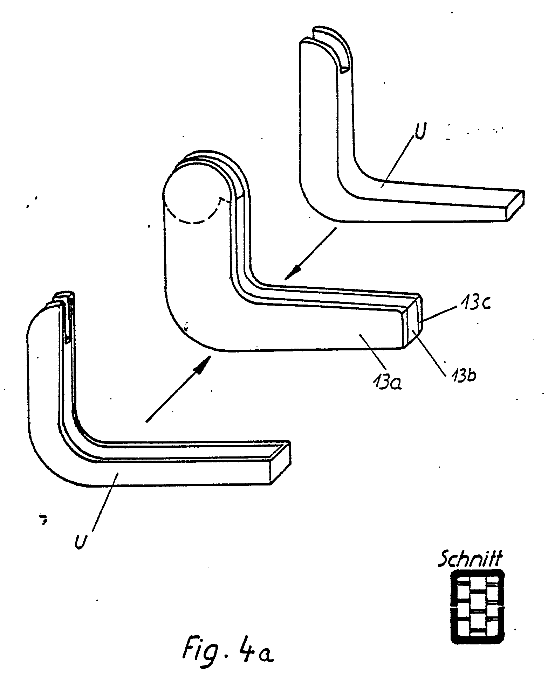

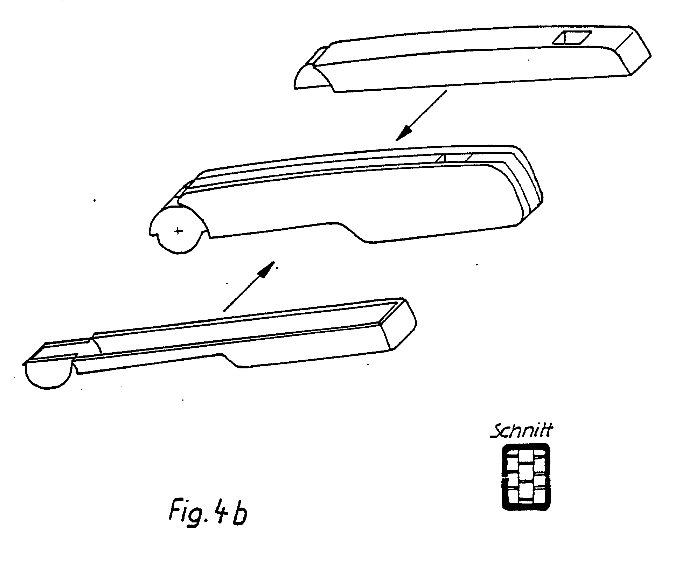

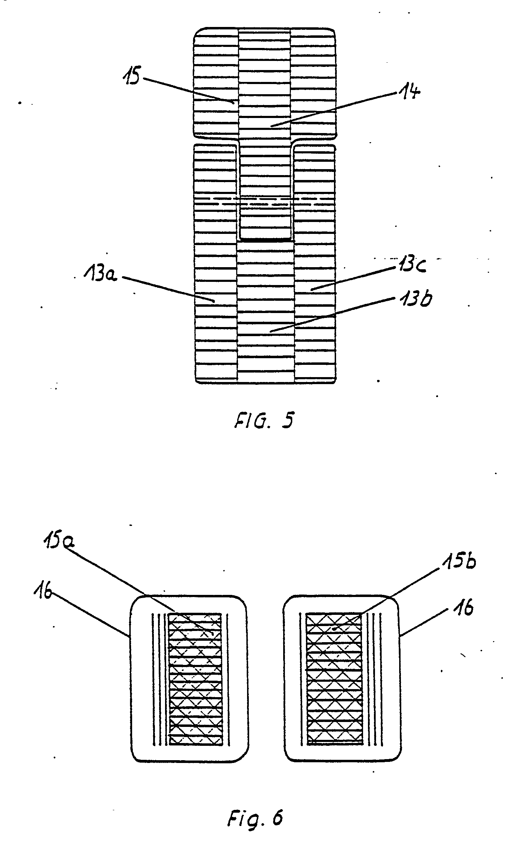

Die an der Sitzschale 2 seitlich anbringbaren Holme 3 bzw. deren Aufbau sind in Fig. 4a dargestellt. Drei Formteile 13a, b und c aus Sandwichplatten vorgefertigt, werden miteinander verbunden. Das innere Formteil 13b ist um das Kopfteil verkürzt und hat eine derartige Dicke, daß das Lagerteil der Armlehne zwischen den beiden Kopfteilen der äußeren Formteile 13a und 13c eingefügt werden kann. Die Umleimer U, welche die Schnittflächen abdecken sind schematisch angedeutet. Die Schnittzeichnung Fig. 5 soll dies erläuternd klarstellen. Mit 14 ist das Lagerteil der schwenkbaren Armlehne 5 angedeutet. Den Aufbau der Armlehne 5 verdeutlicht die Fig. 6. Um die beiden Stützkerne 15a + 15b wird eine mit Harz getränkte Prepreg-Folie 16 in der angedeuteten Weise herumgelegt.

Die so vorgeordnete Einheit wird dann in einer Form in der üblichen Weise ausgehärtet.

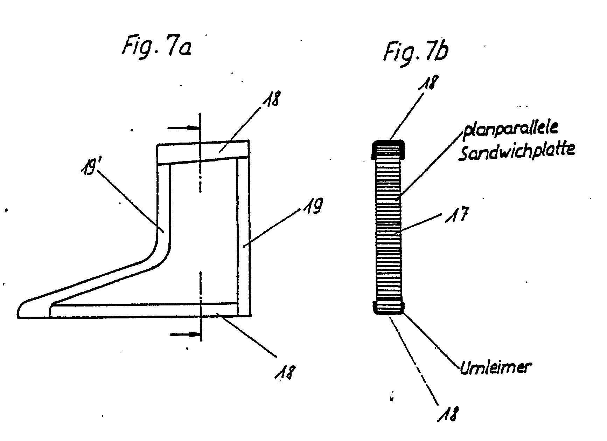

Die Bauweise von Holm und Armlehne sind austauschbar. Einen die Sitzschale aufnehmenden Sitzfuß zeigt Fig. 7a + 7b. Ein dem gewünschten Umriß entsprechender Zuschnitt aus einer planparallelen Sandwichplatte 17 wird an den Schnittstellen mit Umleimerprofilen 18 abgedeckt, wie aus der Schnittzeichnung 7b zu erkennen ist. Der Sitzfuß ist in seinem vorderen Bereich 19 (Bruchzone) oder der Streckzone 19' so gestaltet und dimensioniert, daß bei einer extremen Belastung des Sitzes in diesem Bereich eine energievernichtende Verformung eintritt.

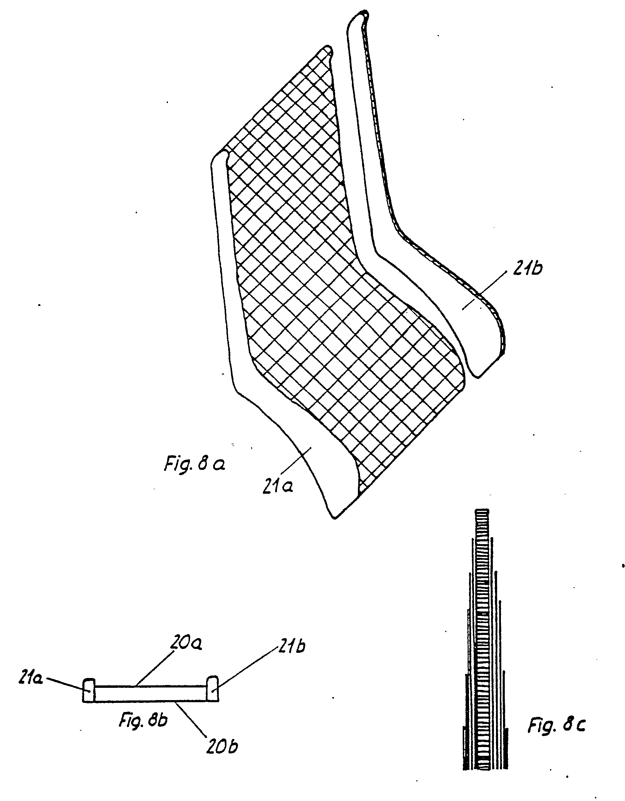

Das großflächigste Bauteil ist die Rückenlehne 4 (Fig. 8a und 8b). Für ihre Herstellung sind verschiedene Verfahren geeignet. Sie setzt sich aus zwei dünnen sphärisch verformten Schalen 20a + 20b zusammen, welche einen Stützkern umgeben. Es ist möglich in eine entsprechende Form mit Harz getränkte Deckschichten sowie einen Stützkern aus konturiertem Schaum zu legen und dann die Aushärtung vorzunehmen.

Es ist auch möglich, einer Deckschicht zunächst die gewünschte Gestalt durch Aushärten in einer Form zu geben, den hinterlegten Stützkern auf ihrer Gegenseite auf die gewünschte Oberflächenform abzufräsen und anschließend die andere Deckschicht aufzubringen und auszuhärten. Die Deckschichten 20a + 20b schließen die Versteifungswülste 21a und 21b mit ein. In Fig. 8c ist angedeutet, wie die Dicke der Deckschichten der Versteifungswülste entsprechend den auftretenden Querkräften angepaßt ist.

Unter Berücksichtigung der bei der Herstellung von Sandwichplatten - wie sie im Hause des Anmelders praktiziert wird - vorliegenden Gegebenheiten, wird verständlich wie vorteilhaft das Anfertigen eines Fluggastsitzes aus Sandwichplatten ist.

Ausgangsmaterial für eine Sandwichplatte ist eine in sich flexible mittlere Einlage in Wabenstruktur oder aus einem sonstigen leichten Körper, welche die Dicke der Platte im wesentlichen bestimmt. Auf die beiden Seiten dieser Einlage wird eine Deckschicht aufgelegt, welche aus einem mit Harz getränkten Prepreg (Trägermaterial, vorzugsweise mit Harz getränkt) besteht. Diese beiden Deckschichten geben der Einlage eine hohe Steifigkeit, sobald die Aushärtung erfolgt ist. Hierzu werden die Deckschichten und die Einlage unter Druck und/oder einer gewissen Temperatur ausgesetzt. Dabei härtet das Harz aus. Auch in ausgehärtetem Zustand ist ein Prepreg noch in gewissem Umfang flexibel, ebenso eine Einlage in Wabenstruktur mit nur einer Deckschicht. Sobald aber beide Deckschichten aufgebracht sind, ist die fertige Sandwichplatte bei geringstem Gewicht äußerst stabil. Die Deckschichten können je nach Anforderung an die Festigkeit unterschiedlich dick aufgelegt werden.

Gemäß der Erfindung, ergibt die Herstellung der Bauteile eines Fluggastsitzes einen äußerst stabilen Sitz bei geringstem Gewicht und einer einfachen Fertigungsmöglichkeit. Die Grundkörper der meisten Bauteile können aus planparallelen Sandwichplatten einfach zugeschnitten werden, vorteilhaft paketweise wie bei der Konfektionierung. Andere Bauteile werden aus konfektionierten Deckschichten und Stützkernen in einer formgebenden Form auf einfache Weise durch Aushärten gestaltet.

## Ansprüche

1. Fluggastsitz, welcher aus einer auf Sitzfüßen montierten Sitzschale mit seitlichen Holmen und Armlehnen sowie einer verstellbaren Rückenlehne mit Klapptisch als wesentliche Bauteile besteht, dadurch gekennzeichnet, daß eines oder mehrere der Bauteile, wie Sitzschale (2) und/oder die seitlichen Holme (3) mit Armlehnen (5) nebst Rückenlehne (4) mit Klapptisch (6) und Sitzfüße (1) aus Sandwichplatten bestehen.

2. Fluggastsitz nach Anspruch 1, dadurch gekennzeichnet, daß die Sandwichplatten aus zwischen tragenden Deckschichten mit zwischengeordnetem Stützkern bestehen.

3. Fluggastsitz nach Anspruch 1 und/oder 2, dadurch gekennzeichnet, daß mindestens eines der Bauteile ganz oder teilweise aus mehreren miteinander verbundenen Sandwichplatten besteht.

4. Fluggastsitz nach einem der Ansprüche 1 bis 3, dadurch gekennzeichnet, daß die mittlere Deckschicht als Verbindung der einzelnen Sandwichplatten dient.

5. Fluggastsitz nach einem oder mehreren der Ansprüche 1 bis 4, dadurch gekennzeichnet, daß sich die Sandwichplatte aus Stützkernen und/oder Deckschichten unterschiedlicher Dicke zusammensetzt.

6. Fluggastsitz nach einem oder mehreren der Ansprüche 1 bis 5, dadurch gekennzeichnet, daß die Sitzschale (2) mindestens teilweise aus zwei miteinander verklebten Sandwichplatten 9a, 9b) besteht.

7. Fluggastsitz nach einem oder mehreren der Ansprüche 1 bis 5, dadurch gekennzeichnet, daß sich die Holme (3) aus mehreren miteinander verklebten Sandwichplatten (13a, 13b, 13c) zusammensetzen, deren Stirnseiten durch Umleimerprofile abgedeckt sind.

8. Fluggastsitz nach Anspruch 7,
dadurch gekennzeichnet, daß die mittlere Sandwichplatte (13b) eine der Lagerbreite der Armlehnen (5) entsprechende Dicke aufweist.

9. Fluggastsitz nach Anspruch 1 und 2,
dadurch gekennzeichnet, daß die Sitzfüße (1) und/oder der Klapptisch (6) aus dem Zuschnitt einer planparallelen Sandwichplatte bestehen, wobei die beiden Deckschichten im Schnittbereich mittels Umleimerprofilen (18) verbunden sind.

10. Fluggastsitz nach Anspruch 9,
dadurch gekennzeichnet, daß der Sitzfuß (1) in seiner Druckzone bzw. Zugzone (19) so gestaltet und dimensioniert ist, daß er bei Extrembelastung eine Verformung erfährt und dadurch Energie vernichtet.

11. Fluggastsitz nach Anspruch 1 und 2,
dadurch gekennzeichnet, daß sich die Rückenlehne (4) aus zwei dünnen sphärisch verformten Schalen (20a, 20b) zusammensetzt, welche einen Stützkern umgeben.

12. Fluggastsitz nach Anspruch 11,
dadurch gekennzeichnet, daß die Rückenlehne (4) seitliche Versteifungswülste (21a, 21b) aus vorgefertigten Sandwichplatten aufweist.

13. Fluggastsitz nach Anspruch 12,
dadurch gekennzeichnet, daß die Deckschichten der Versteifungswülste in ihrer Dicke dem Querkraftverlauf angepaßt sind.

14. Verfahren zum Herstellen von Bauteilen eines Fluggastsitzes nach einem oder mehreren der Ansprüche 1 bis 13,
dadurch gekennzeichnet, daß die gewünschte Krümmung der Sandwichplatte durch Aushärten mindestens einer der Deckschichten in einer entsprechenden Form erreicht wird.

15. Verfahren zum Herstellen von Bauteilen eines Fluggastsitzes nach einem oder mehreren der Ansprüche 1 bis 13,
dadurch gekennzeichnet, daß die gewünschte Krümmung der Sandwichplatte dadurch erreicht wird, daß eine der Deckschichten geschlitzt wird und mit einem Formteil in einer Form verklebt oder mit einer nicht ausgehärteten Deckschicht in einer Form ausgehärtet wird.

16. Verfahren zum Herstellen von Bauteilen eines Fluggastsitzes nach einem der Ansprüche 1 bis 13,
dadurch gekennzeichnet, daß die Verbindung zwischen Stützkern und Deckschichten durch Aushärten in einer Form während des Herstellungsprozesses erfolgt.

17. Verfahren zum Herstellen von Bauteilen eines Fluggastsitzes nach einem der Ansprüche 1 bis 3,
dadurch gekennzeichnet, daß mindestens eine der den Stützkern umgebenden Schalen und/oder Deckschichten einzeln hergestellt und anschließend mit dem Stützkern verklebt werden.

18. Verfahren zum Herstellen von Bauteilen eines Fluggastsitzes nach einem der Ansprüche 1 bis 13,
dadurch gekennzeichnet, daß zur Formgebung von Schalen oder Deckschichten diese vor dem Aushärten in eine Form mit entsprechender Kontur gelegt werden.

19. Verfahren zum Herstellen von Bauteilen eines Fluggastsitzes nach einem der Ansprüche 1 bis 13, insbesondere einer Rückenlehne,
dadurch gekennzeichnet, daß die beiden Deckschichten mit einem konturierten Stützkern in einer Form ausgehärtet werden.

20. Verfahren zum Herstellen von Bauteilen eines Fluggastsitzes nach einem der Ansprüche 1 bis 13, insbesondere einer Rückenlehne,
dadurch gekennzeichnet, daß eine Deckschicht mit einem Stützkern in einer Form ausgehärtet wird, danach die freie Seite des Stützkernes auf Kontur gefräst und die Gegen-Deckschicht aufgebracht und gehärtet wird.

21. Verfahren zum Herstellen von Bauteilen eines Fluggastsitzes nach einem der Ansprüche 1 bis 13, insbesondere einer Armlehne,
dadurch gekennzeichnet, daß eine Deckschicht um den einen Stützkern herum, zwischen den beiden Stützkernen hindurch und um den anderen Stützkern herum zurückgeführt wird, und daß die so zusammengefügte Einheit in einer Form ausgehärtet wird.

22. Verfahren zum Herstellen von Bauteilen eines Fluggastsitzes nach einem der Ansprüche 1 bis 21,
dadurch gekennzeichnet, daß mehrere Grundelemente für die Bauteile aus einer größeren planparallelen Sandwichplatte zugeschnitten werden.

Fig. 1

9a

10

9b

Umleimer

Fig. 2

12

11

geschlitzte
Deckschicht

Fig. 3

EP 0 337 098 A2

U

13c

13a    13b

U

Schnitt

Fig. 4a

Fig. 4 b

Schnitt

15

14

13a

13c

13b

FIG. 5

15a

15b

16

16

Fig. 6

Fig. 7a

Fig. 7b

18

19'

19

18

18

planparallele
Sandwichplatte

17

Umleimer

18

EP 0 337 098 A2

Fig. 8 a

21b

21a

20a

21a

21b

Fig. 8b

20b

Fig. 8 c